# EUROPÄISCHE PATENTANMELDUNG

(11) **EP 3 543 811 A1**
(43) Veröffentlichungstag der Anmeldung: **25.09.2019**
(21) Anmeldenummer: 18162878.5
(22) Anmeldetag: 20.03.2018
(51) Int. Cl.: G05B 19/4155

(54) **IN IHRER LEISTUNGSFÄHIGKEIT SKALIERBARE NUMERISCHE STEUERUNG**

(71) Anmelder: Siemens Aktiengesellschaft, 80333 München (DE)
(72) Erfinder: Bretschneider, Jochen, 73732 Esslingen (DE); Spielmann, Ralf, 70569 Stuttgart (DE); Stellwag, Philippe, 90419 Nürnberg (DE)

(57) **Zusammenfassung**

Eine numerische Steuerung (5) führt unter Kontrolle durch ein Systemprogramm (6) ein Nutzprogramm (9) aus. Die numerische Steuerung (5) ermittelt im Rahmen der Ausführung des Nutzprogramms (9) mittels mindestens einer Prozessoreinrichtung (10) mit mindestens einer ersten Taktrate Sollwerte für lagegeregelte Achsen (3) einer von der numerischen Steuerung (5) gesteuerten Maschine (1) und steuert die lagegeregelten Achsen (3) entsprechend den jeweils ermittelten Sollwerten an. In der numerischen Steuerung (5) ist für Ressourcen der numerischen Steuerung (5) jeweils hinterlegt, ob und gegebenenfalls in welchem Umfang sie freigegeben sind oder ob sie gesperrt sind. Die numerische Steuerung (5) ermittelt die Sollwerte für die lagegeregelten Achsen (3) unter Nutzung ausschließlich der freigegebenen Ressourcen.

## Beschreibung

Die vorliegende Erfindung geht aus von einem Betriebsverfahren für eine numerische Steuerung,
- wobei die numerische Steuerung unter Kontrolle durch ein Systemprogramm ein Nutzprogramm ausführt,
- wobei die numerische Steuerung im Rahmen der Ausführung des Nutzprogramms mittels mindestens einer Prozessoreinrichtung mit mindestens einer ersten Taktrate Sollwerte für lagegeregelte Achsen einer von der numerischen Steuerung gesteuerten Maschine ermittelt und die lagegeregelten Achsen entsprechend den jeweils ermittelten Sollwerten ansteuert.

Die vorliegende Erfindung geht weiterhin aus von einem Systemprogramm für eine numerische Steuerung, wobei das Systemprogramm Maschinencode umfasst, der von der numerischen Steuerung abarbeitbar ist, wobei die Abarbeitung des Maschinencodes durch die numerische Steuerung bewirkt, dass die numerische Steuerung ein derartiges Betriebsverfahren ausführt.

Die vorliegende Erfindung geht weiterhin aus von einer numerischen Steuerung, wobei die numerische Steuerung mit einem derartigen Systemprogramm programmiert ist, so dass sie ein derartiges Betriebsverfahren ausführt.

Numerische Steuerungssysteme werden in vielen Leistungsklassen am Markt angeboten. Die Skalierung der Leistung kann beispielsweise die Anzahl an bereitgestellten Technologien (Drehen, Fräsen, Laserbearbeitung, ...), Anzahl an steuerbaren Achsen, Art und Umfang aktivierbarer Steuerungsfunktionen und andere mehr betreffen. Zusammen mit den soeben beispielhaft genannten externen Leistungsmerkmalen steigen in der Regel weiterhin auch Anforderungen an die die Leistungsmerkmale der Steuerungssysteme wie beispielsweise die Leistungsfähigkeit einer Prozessoreinrichtung der numerischen Steuerung oder die Menge an verfügbarem Arbeitsspeicher und dergleichen mehr an. Der Hersteller einer Produktionsmaschine (beispielsweise einer Werkzeugmaschine) erwirbt die von ihm für geeignet erachtete numerische Steuerung einer bestimmten Leistungsklasse und verwendet diese.

Im Rahmen von späteren Modifikationen ist der Hersteller der Produktionsmaschine an die Limitierungen der von ihm verwendeten numerischen Steuerung gebunden. Wenn später eine höhere Leistungsfähigkeit gefordert ist - beispielsweise eine höhere Bearbeitungsgenauigkeit, die durch eine kleinere Interpolationszeit erreicht wird, - ist dies im Stand der Technik nur durch einen Austausch der numerischen Steuerung gegen eine entsprechend leistungsfähigere numerische Steuerung oder durch Inkaufnahme einer erhöhten Bearbeitungszeit realisierbar. Das Verwenden einer leistungsfähigeren numerischen Steuerung ist mit erheblichen Kosten und auch erheblichem Inbetriebsetzungsaufwand verbunden. Wenn umgekehrt die bisherige numerische Steuerung weiterhin verwendet werden soll, ist die Verwendung dieser numerischen Steuerung nur dadurch realisierbar, dass anderweitig Beschränkungen hingenommen werden, beispielsweise bezüglich der erreichbaren Bearbeitungszeit.

Es ist zwar denkbar, stets eine "große" und dementsprechend leistungsstarke numerische Steuerung zu verwenden. Ein Erwerb einer derart großen und dementsprechend leistungsstarken numerischen Steuerung kommt für den Hersteller der Produktionsmaschine jedoch aus Kostengründen nicht in Frage. Er wird vielmehr - zumindest in der Regel - lediglich die "gerade ausreichende" numerische Steuerung verwenden.

Umgekehrt könnte der Hersteller der numerischen Steuerung natürlich eine entsprechend "große", leistungsstarke numerische Steuerung zum Preis einer kleineren, leistungsschwächeren numerischen Steuerung vertreiben. Dies ist jedoch für den Hersteller der numerischen Steuerung aus Kostengründen indiskutabel.

In der Praxis bleibt daher der Hersteller der Produktionsmaschine im Rahmen von späteren Modifikationen nach wie vor an die Limitierungen der von ihm verwendeten numerischen Steuerung gebunden.

Die Aufgabe der vorliegenden Erfindung besteht darin, Möglichkeiten zu schaffen, mittels derer die numerische Steuerung in ihrer Leistungsfähigkeit skalierbar wird, wobei dennoch sowohl die Interessen des Herstellers der Produktionsmaschine als auch die Interessen des Herstellers der numerischen Steuerung gewahrt bleiben.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet,
- dass in der numerischen Steuerung für Ressourcen der numerischen Steuerung jeweils hinterlegt ist, ob und gegebenenfalls in welchem Umfang sie freigegeben sind oder ob sie gesperrt sind, und
- dass die numerische Steuerung die Sollwerte für die lagegeregelten Achsen unter Nutzung ausschließlich der freigegebenen Ressourcen ermittelt.

Aufgrund dieser Vorgehensweise kann einerseits vom Hersteller der numerischen Steuerung eine prinzipiell sehr leistungsstarke numerische Steuerung zu einem angemessenen Preis an den Hersteller der Produktionsmaschine geliefert werden. Dennoch ist gewährleistet, dass der Hersteller der Produktionsmaschine die numerische Steuerung nur im Rahmen derjenigen Leistungsmerkmale nutzen kann, die vom Hersteller der numerischen Steuerung freigegeben sind.

Die Festlegung, welche der Ressourcen - gegebenenfalls in welchem Umfang - freigegeben und welche gesperrt sind, kann vom Hersteller der numerischen Steuerung nach Bedarf bestimmt werden. Zahlt der Hersteller der Produktionsmaschine einen relativ niedrigen Preis, werden nur wenige Ressourcen freigegeben bzw. freigegebene Ressourcen limitiert. Ist der Preis höher, werden mehr Ressourcen freigegeben bzw. Limitierungen aufgehoben. Hierbei werden in der Regel umso mehr Ressourcen freigegeben und Limitierungen aufgehoben, je höher der Preis ist, den der Hersteller der Produktionsmaschine zahlt.

In einer bevorzugten Ausgestaltung des Betriebsverfahrens ist vorgesehen, dass die numerische Steuerung im Rahmen der Ausführung des Systemprogramms, aber vor der Ausführung des Nutzprogramms von einer Bedienperson oder von einer computergesteuerten Einrichtung einen ersten Freischaltcode entgegennimmt und in Abhängigkeit von dem entgegengenommenen ersten Freischaltcode bestimmt, welche der Ressourcen in welchem Umfang freigegeben sind und welche der Ressourcen gesperrt sind. Dadurch ist es möglich, die Ressourcen auch nachträglich noch nach Bedarf freizuschalten.

Bezüglich anderer Leistungsparameter der numerischen Steuerung sind zur Nutzung der Ressourcen analoge Vorgehensweisen realisierbar. Insbesondere ist es möglich, dass in der numerischen Steuerung für auf das Nutzprogramm bezogene wiederholt ausgeführte steuerungsinterne Aktionen minimale Ausführungszeiten hinterlegt sind und dass die numerische Steuerung im Rahmen der Ausführung des Nutzprogramms die steuerungsinternen Aktionen zumindest mit der jeweiligen minimalen Ausführungszeit ausführt.

Auch hier ist es wieder möglich, dass die numerische Steuerung im Rahmen der Ausführung des Systemprogramms, aber vor der Ausführung des Nutzprogramms von einer Bedienperson oder von einer computergesteuerten Einrichtung einen zweiten Freischaltcode entgegennimmt und die minimalen Ausführungszeiten in Abhängigkeit von dem entgegengenommenen zweiten Freischaltcode bestimmt. Dadurch ist es möglich, die Leistungsfähigkeit der numerischen Steuerung auch bezüglich der steuerungsinternen Aktionen nachträglich noch zu skalieren.

In analoger Weise ist es auch möglich, dass in der numerischen Steuerung eine erste Obergrenze für die mindestens eine erste Taktrate (Frequenz) hinterlegt ist und dass die numerische Steuerung im Rahmen der Ausführung des Nutzprogramms die erste Taktrate auf die erste Obergrenze begrenzt.

Auch hier ist es wieder möglich, dass die numerische Steuerung im Rahmen der Ausführung des Systemprogramms, aber vor der Ausführung des Nutzprogramms von einer Bedienperson oder von einer computergesteuerten Einrichtung einen dritten Freischaltcode entgegennimmt und die erste Obergrenze in Abhängigkeit von dem entgegengenommenen dritten Freischaltcode bestimmt. Dadurch ist es möglich, die Leistungsfähigkeit der numerischen Steuerung auch bezüglich der ersten Taktrate nachträglich noch zu skalieren.

Ebenso ist es möglich, dass die numerische Steuerung im Rahmen der Ausführung des Nutzprogramms mit einer zweiten Taktrate und/oder mit einer Kommunikationsbandbreite mit einer externen Einrichtung kommuniziert und dass in der numerischen Steuerung eine zweite Obergrenze für die zweite Taktrate und/oder eine dritte Obergrenze für die Kommunikationsbandbreite hinterlegt ist.

Auch hier ist es wieder möglich, dass die numerische Steuerung im Rahmen der Ausführung des Systemprogramms, aber vor der Ausführung des Nutzprogramms von einer Bedienperson oder von einer computergesteuerten Einrichtung einen vierten Freischaltcode entgegennimmt und die zweite Obergrenze und/oder die dritte Obergrenze in Abhängigkeit von dem entgegengenommenen vierten Freischaltcode bestimmt. Dadurch ist auch hier die entsprechende Skalierung noch nachträglich möglich.

In analoger Weise ist es möglich, dass die Prozessoreinrichtung mit einem Prozessortakt arbeitet, dass in der numerischen Steuerung eine vierte Obergrenze für den Prozessortakt hinterlegt ist und dass die numerische Steuerung im Rahmen der Ausführung des Nutzprogramms den Prozessortakt auf die vierte Obergrenze begrenzt.

Auch hier ist es wieder möglich, dass die numerische Steuerung im Rahmen der Ausführung des Systemprogramms, aber vor der Ausführung des Nutzprogramms von einer Bedienperson oder von einer computergesteuerten Einrichtung einen fünften Freischaltcode entgegennimmt und die vierte Obergrenze in Abhängigkeit von dem entgegengenommenen fünften Freischaltcode bestimmt. Dadurch ist auch hier die entsprechende Skalierung noch nachträglich möglich.

Die Aufgabe wird weiterhin durch ein Systemprogramm für eine numerische Steuerung mit den Merkmalen des Anspruchs 11 gelöst. Erfindungsgemäß bewirkt die Abarbeitung des Maschinencodes durch die numerische Steuerung, dass die numerische Steuerung ein erfindungsgemäßes Betriebsverfahren ausführt.

Die Aufgabe wird weiterhin durch eine numerische Steuerung mit den Merkmalen des Anspruchs 12 gelöst. Erfindungsgemäß ist die numerische Steuerung mit einem erfindungsgemäßen Systemprogramm programmiert, so dass die numerische Steuerung ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Produktionsmaschine,
- FIG 2: ein Ablaufdiagramm und
- FIG 3: ein weiteres Ablaufdiagramm.

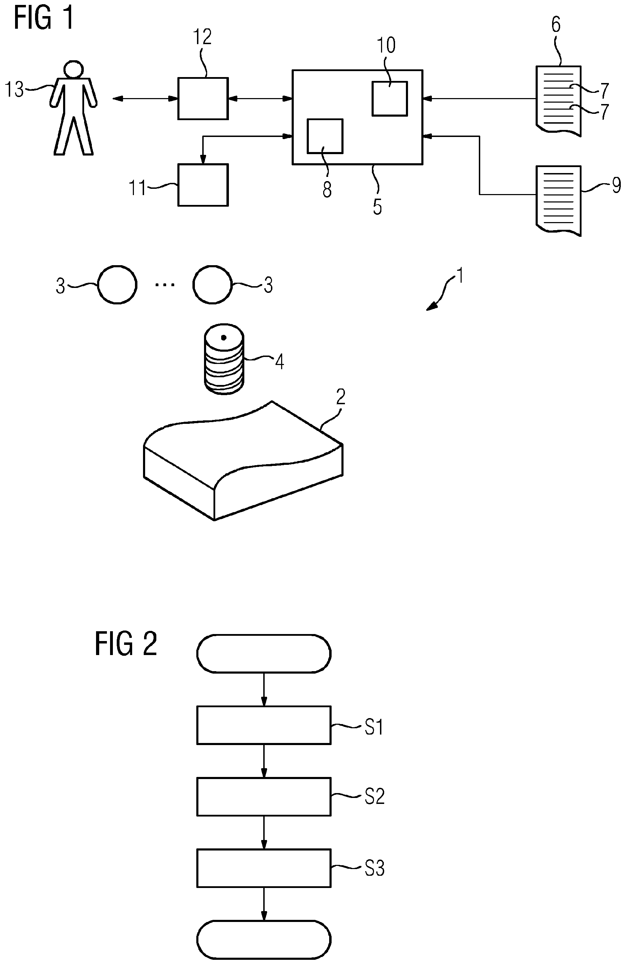

Gemäß FIG 1 soll mittels einer Produktionsmaschine 1 eine Handhabung eines Werkstücks 2 erfolgen, beispielsweise eine Bearbeitung. Die Produktionsmaschine weist zu diesem Zweck eine Anzahl an lagegeregelten Achsen 3 auf, mittels derer beispielsweise ein Werkzeug 4 relativ zum Werkstück 2 lagegeregelt positioniert werden kann. Die Positionierung kann nach Bedarf translatorisch und/oder rotatorisch sein. Die Anzahl an lagegeregelten Achsen 3 kann nach Bedarf sein. Oftmals sind mindestens drei lagegeregelte Achsen 3 vorhanden. Es sind jedoch auch Ausgestaltungen mit mehr oder weniger als drei lagegeregelten Achsen möglich.

Zur Steuerung der Produktionsmaschine 1 ist eine numerische Steuerung 5 vorhanden. Die numerische Steuerung 5 ist mit einem Systemprogramm 6 programmiert. Das Systemprogramm 6 umfasst Maschinencode 7, der von der numerischen Steuerung 5 abarbeitbar ist. Die Abarbeitung des Maschinencodes 7 durch die numerische Steuerung 5 bewirkt, dass die numerische Steuerung 5 ein Betriebsverfahren ausführt, das nachstehend in Verbindung mit FIG 2 näher erläutert wird.

Gemäß FIG 2 führt die numerische Steuerung 5 zunächst nur das Systemprogramm 6 aus. Dieser Zustand kann sich beispielsweise beim Hochlaufen oder nach einem Reset der numerischen Steuerung 5 ergeben. Im Rahmen der Ausführung des Systemprogramms 6 liest die numerische Steuerung 5 in einem Schritt S1 aus einem Konfigurationsspeicher 8 verschiedene Parameter aus. In einem Schritt S2 konfiguriert sich die numerische Steuerung 5 entsprechend den ausgelesenen Parametern. Auf die vorgenommenen Konfigurierungen wird später noch näher eingegangen.

Nach dem Konfigurieren beginnt die numerische Steuerung 5 in einem Schritt S3 mit der Ausführung eines Nutzprogramms 9. Das Nutzprogramm 9 kann beispielsweise ein übliches Teileprogramm sein, welches für die einzelnen lagegeregelten Achsen 3 entsprechende Folgen von Lagesollwerten umfasst. Die numerische Steuerung 5 führt das Nutzprogramm 9 unter Kontrolle durch das Systemprogramm 6 aus.

Im Rahmen der Ausführung des Nutzprogramms 9 ermittelt die numerische Steuerung 5 mittels mindestens einer Prozessoreinrichtung 10 mit mindestens einer ersten Taktrate Sollwerte für die lagegeregelten Achsen 3. Sie steuert weiterhin die lagegeregelten Achsen 3 entsprechend den jeweils ermittelten Sollwerten an. Bei der ersten Taktrate kann es sich beispielsweise um einen IPO-Takt (= Interpolationstakt), um einen Lageregeltakt, um einen Drehzahlregeltakt oder um einen Stromregeltakt handeln. Auch andere technologiebezogene Takte sind möglich. Technologiebezogene Takte sind Takte, welche auf die Abarbeitung der anhand des Nutzprogramms 9 ermittelten Sollwerte bezogen sind. Der Gegensatz sind steuerungsbezogene Takte, welche lediglich die interne Funktionsweise der numerischen Steuerung 5 betreffen. Die erste Taktrate hat die Einheit Hertz. Je größer die erste Taktrate ist, desto schneller kann - bei ansonsten unveränderten Bedingungen - das Nutzprogramm 9 abgearbeitet werden.

Die in der numerischen Steuerung hinterlegten Parameter können beispielsweise festlegen, welche Ressourcen der numerischen Steuerung 5 freigegeben sind und welche gesperrt sind. Wenn auch Zwischenstufen zwischen einem vollständigen Sparen und einer vollständigen Freigabe möglich sind, können die hinterlegten Parameter auch festlegen, in welchem Umfang die Ressourcen freigegeben sind. Wenn die Prozessoreinrichtung 10 als Mehrkernprozessor ausgebildet ist, sind die Kerne der Prozessoreinrichtung 10 ein Beispiel derartiger Ressourcen. Die Parameter können beispielsweise festlegen, ob von einem Quadcore-Prozessor nur ein einzelner Prozessorkern, zwei Prozessorkerne oder alle vier Prozessorkerne genutzt werden. Analoge Ausführungen gelten selbstverständlich auch für Prozessoreinrichtungen 10 mit einer anderen Anzahl von Prozessorkernen, beispielsweise 2, 8 oder 16 Prozessorkernen. Ein anderes Beispiel sind in diesem Fall die einzelnen Threads der Prozessoreinrichtung 10. Die Parameter können beispielsweise festlegen, ob bei maximal acht möglichen Threads nur ein einzelner Thread genutzt wird oder ob zwei, vier oder acht Threads genutzt werden. Analoge Ausführungen gelten selbstverständlich auch für Prozessoreinrichtungen 10 mit einer anderen Anzahl von Threads, beispielsweise 4 oder 16 Threads. Ein weiteres Beispiel besteht darin, festzulegen, ob von physikalisch vorhandenen 4 MB Cache nichts, 1 MB, 2 MB oder alle 4 MB genutzt werden. Ein weiteres Beispiel besteht darin, festzulegen, ob von zwei vorhandenen Cache-Niveaus ein Cache-Niveau genutzt wird oder ob zwei Cache-Niveaus genutzt werden. Ein weiteres Beispiel besteht darin, festzulegen, ob von physikalisch vorhandenen 4 GB Arbeitsspeicher 1 GB, 2 GB oder alle 4 GB genutzt werden. Ein weiteres Beispiel besteht darin, ob eine vorhandene GPU (= graphical processing unit) genutzt wird oder nicht. Auch andere funktionale Einheiten, beispielsweise ein DSP (digital signal processor) oder fest programmierte Bausteine (beispielsweise ASICs oder FPGAs) können nach Bedarf freigeschaltet oder gesperrt werden.

Die obigen Ausführungen sind selbstverständlich nur beispielhaft. Weiterhin ist es nicht nur möglich, interne Ressourcen der numerischen Steuerung 5 (vollständig oder teilweise) freizugeben oder zu sperren. Analoge Vorgehensweisen sind auch für externe Ressourcen der numerischen Steuerung 5 möglich. Beispielsweise kann durch die Parameter auch festgelegt sein, ob und gegebenenfalls in welchem Umfang weitere, externe Rechenleistung - beispielsweise von einer anderen numerischen Steuerung oder über eine Cloud - genutzt werden kann.

Die Parameter können weiterhin festlegen, mit welcher Ausführungszeit auf das Nutzprogramm 9 bezogene wiederholt ausgeführte steuerungsinterne Aktionen minimal ausgeführt werden, d.h. welche Zeit mindestens zwischen zwei unmittelbar aufeinanderfolgenden derartigen Aktionen liegt. Ein Beispiel einer derartigen Ausführungszeit ist die Satzwechselzeit, also die Zeit zwischen dem Laden zweier aufeinander folgender Datensätze des Nutzprogramms 9. Beispielsweise können die Parameter eine aufgrund der Leistungsfähigkeit der numerischen Steuerung 5 minimal mögliche Satzwechselzeit von 1 ms nicht begrenzen, auf 2 ms begrenzen oder auf 4 ms begrenzen.

Die Parameter können weiterhin eine erste Obergrenze für die mindestens eine erste Taktrate festlegen. Beispielsweise können die Parameter einen aufgrund der Leistungsfähigkeit der numerischen Steuerung 5 maximal möglichen Lageregeltakt von 4 kHz nicht begrenzen, auf 2 kHz begrenzen oder auf 1 kHz begrenzen.

Im Rahmen der Ausführung des Nutzprogramms 9 kommuniziert die numerische Steuerung 5 weiterhin oftmals mit anderen Einrichtungen, beispielsweise mit einer speicherprogrammierbaren Steuerung 11 (oftmals als PLC = programmable logic control bezeichnet) oder anderen Einrichtungen wie beispielsweise einer Mensch-Maschine-Schnittstelle 12. Auch eine Kommunikation mit einer weiteren numerischen Steuereinrichtung über eine entsprechende Maschine-Maschine-Schnittstelle ist möglich. Eine derartige über die Maschine-Maschine-Schnittstelle erfolgt in der Regel mit einer sehr hohen oder breiten Kommunikationsbandbreite.

Die Kommunikation mit der speicherprogrammierbaren Steuerung 11 erfolgt in der Regel mit einer zweiten Taktrate. Die Kommunikation mit der Mensch-Maschine-Schnittstelle 12 erfolgt in der Regel mit einer Kommunikationsbandbreite. Die Parameter können beispielsweise eine zweite Obergrenze für die zweite Taktrate festlegen. Beispielsweise können die Parameter eine aufgrund der Leistungsfähigkeit der numerischen Steuerung 5 maximal mögliche zweite Taktrate von 200 Hz nicht begrenzen, auf 100 Hz begrenzen oder auf 50 Hz begrenzen. Alternativ oder zusätzlich können die Parameter beispielsweise eine dritte Obergrenze für die Kommunikationsbandbreite festlegen. Beispielsweise können die Parameter eine aufgrund der Leistungsfähigkeit der numerischen Steuerung 5 maximal mögliche Kommunikationsbandbreite von 1 Mbit/s nicht begrenzen, auf 500 kbit/s begrenzen oder auf 250 kbit/s begrenzen.

Die Prozessoreinrichtung 10 arbeitet mit einem Prozessortakt. Der Prozessortakt kann konstant sein, beispielsweise bei 3,0 GHz liegen. Alternativ kann er variabel sein, beispielsweise zwischen 2,5 GHz und 3,0 GHz variieren. Unabhängig davon, ob der Prozessortakt konstant oder variabel ist, können die Parameter jedoch eine vierte Obergrenze für den Prozessortakt festlegen, beispielsweise den Prozessortakt nicht begrenzen, auf 2,5 GHz begrenzen oder auf 2,0 GHz begrenzen.

Die numerische Steuerung 5 beachtet im Rahmen der Ausführung des Schrittes S3 alle durch die Parameter festgelegten Restriktionen und Limitierungen. Insbesondere ermittelt die numerische Steuerung 5 die Sollwerte für die lagegeregelten Achsen 3 unter Nutzung ausschließlich der freigegebenen Ressourcen. Weiterhin führt sie die steuerungsinternen Aktionen zumindest mit der jeweiligen minimalen Ausführungszeit aus. Die Ausführungszeit kann also zwar größer als die durch die Parameter spezifizierte minimale Ausführungszeit sein, nicht aber kleiner. Weiterhin begrenzt sie die erste Taktrate auf die erste Obergrenze, die zweite Taktrate auf die zweite
Obergrenze und die Kommunikationsbandbreite auf die dritte Obergrenze. Schließlich begrenzt sie den Prozessortakt auf die vierte Obergrenze.

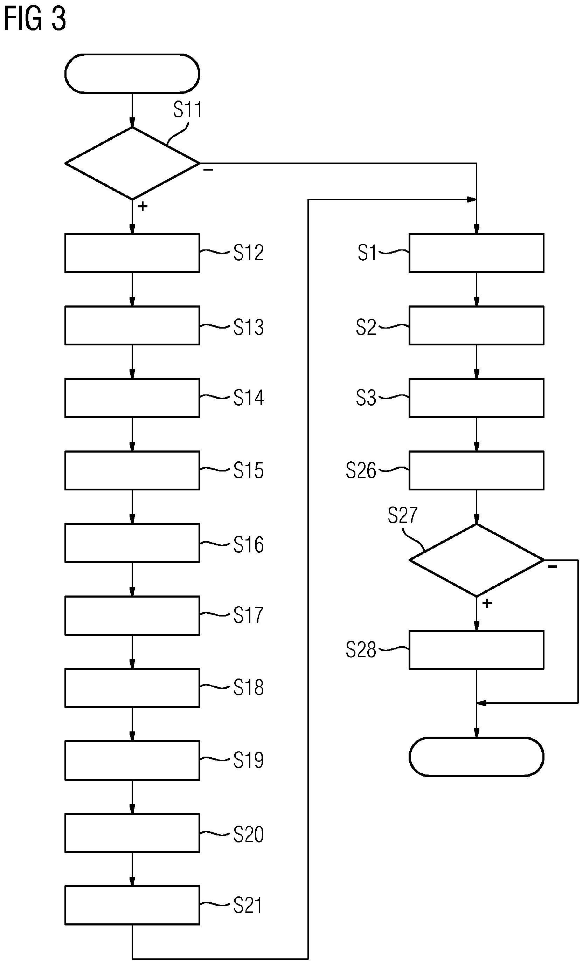

Vorzugsweise ist die obenstehend in Verbindung mit FIG 2 erläuterte Vorgehensweise entsprechend FIG 3 ausgestaltet.

Gemäß FIG 3 sind zusätzlich Schritte S11 bis S21 vorhanden. Im Schritt S11 prüft die numerische Steuerung 5, ob ihr von einer Bedienperson 13 oder von einer computergesteuerten Einrichtung ein Gesamtcode vorgegeben wird. Gegebenenfalls nimmt sie den Gesamtcode entgegen. Wenn ihr der Gesamtcode nicht vorgegeben wird, geht die numerische Steuerung 5 zum Schritt S1 über.

Anderenfalls extrahiert die numerische Steuerung 5 im Schritt S12 aus dem Gesamtcode einen ersten Freischaltcode. Im Schritt S13 bestimmt die numerische Steuerung 5 in Abhängigkeit von dem entgegengenommenen ersten Freischaltcode, welche der Ressourcen - gegebenenfalls in welchem Umfang - freigegeben und welche der Ressourcen gesperrt sind. Insbesondere ändert sie den Inhalt des Konfigurationsspeichers 8 entsprechend.

In analoger Weise extrahiert die numerische Steuerung 5 im Schritt S14 aus dem Gesamtcode einen zweiten Freischaltcode. Im Schritt S15 bestimmt die numerische Steuerung 5 in Abhängigkeit von dem entgegengenommenen zweiten Freischaltcode die minimalen Ausführungszeiten. Insbesondere ändert sie den Inhalt des Konfigurationsspeichers 8 entsprechend.

In analoger Weise extrahiert die numerische Steuerung 5 im Schritt S16 aus dem Gesamtcode einen dritten Freischaltcode. Im Schritt S17 bestimmt die numerische Steuerung 5 in Abhängigkeit von dem entgegengenommenen dritten Freischaltcode die erste Obergrenze. Insbesondere ändert sie den Inhalt des Konfigurationsspeichers 8 entsprechend.

In analoger Weise extrahiert die numerische Steuerung 5 im Schritt S18 aus dem Gesamtcode einen vierten Freischaltcode. Im Schritt S19 bestimmt die numerische Steuerung 5 in Abhängigkeit von dem entgegengenommenen vierten Freischaltcode die zweite Obergrenze und/oder die dritte Obergrenze. Insbesondere ändert sie den Inhalt des Konfigurationsspeichers 8 entsprechend.

In analoger Weise extrahiert die numerische Steuerung 5 im Schritt S20 aus dem Gesamtcode einen fünften Freischaltcode. Im Schritt S21 bestimmt die numerische Steuerung 5 in Abhängigkeit von dem entgegengenommenen fünften Freischaltcode die vierte Obergrenze. Insbesondere ändert sie den Inhalt des Konfigurationsspeichers 8 entsprechend.

Soweit erläutert, sind die Schritte S12 bis S21 alle vorhanden. Es ist jedoch möglich, dass einzelne Paare der Schritte S12 bis S21 entfallen.

Weiterhin ist entsprechend der Darstellung in FIG 3 der Schritt S3 vorzugsweise durch einen Schritt S26 ergänzt. Im Schritt S26 ermittelt die numerische Steuerung 5, ob und gegebenenfalls in welchem Umfang die Abarbeitung des Nutzprogramms 9 beschleunigt werden könnte, wenn gesperrte oder nur in beschränktem Umfang nutzbare Ressourcen freigegeben werden, die minimalen Ausführungszeiten reduziert werden, die mindestens eine erste Taktrate erhöht wird, die zweite Taktrate erhöht wird und/oder die Kommunikationsbandbreite erhöht wird. Aufbauend auf diesen Ermittlungen prüft die numerische Steuerung 5 in einem Schritt S27, ob eine entsprechende Meldung an die Bedienperson 13 oder an eine computergesteuerte Einrichtung sinnvoll ist. Falls die numerische Steuerung 5 zu diesem Schluss kommt, gibt sie in einem Schritt S28 die entsprechende Meldung an die Bedienperson 13 oder die computergesteuerte Einrichtung aus. Dadurch ist es möglich, die entsprechenden Freischaltcodes zu erwerben und der numerischen Steuerung 5 vorzugeben. Falls die numerische Steuerung 5 zu dem Schluss kommt, dass eine derartige Meldung nicht sinnvoll ist, unterbleibt die entsprechende Meldung. Bei der computergesteuerten Einrichtung, an welche die Meldung des Schrittes S27 erfolgt, kann es sich nach Bedarf um dieselbe oder um eine andere computergesteuerte Einrichtung handeln wie diejenige computergesteuerte Einrichtung, welche den Gesamtcode vorgibt.

Durch die erfindungsgemäße Vorgehensweise ist es beispielsweise möglich, einen schnelleren IPO-Takt dann und nur dann zu realisieren, wenn bei einer Drehbearbeitung eine nicht rotationssymmetrische Bearbeitung erfolgen soll. Denn in diesem Fall wird ein sehr kurzer IPO-Takt benötigt, damit sich die Unrundheit auch bei relativ hohen Spindeldrehzahl noch genau genug interpolieren lässt. Beispielsweise kann, um einen hinreichend schnellen IPO-Takt realisieren zu können, zugleich auch eine Parallelbearbeitung auf mehreren Prozessorkernen der Prozessoreinrichtung 10 erforderlich sein. In diesem Fall kann beispielsweise aufgrund eines entsprechenden ersten Freischaltcodes eine Freischaltung aller vier Prozessorkerne eines Quadcore-Prozessors vorgenommen werden.

In ähnlicher Weise kann aufgrund einer entsprechenden Freigabe ein Teil einer sogenannten Satzaufbereitung auf einen zusätzlichen Prozessorkern ausgelagert werden, um diese schneller, exakter und/oder anderweitig verbessert berechnen und verarbeiten zu können. In diesem Fall kann beispielsweise aufgrund eines entsprechenden ersten Freischaltcodes eine Freischaltung von zwei der vier Prozessorkerne eines Quadcore-Prozessors vorgenommen werden.

Zusammengefasst betrifft die vorliegende Erfindung somit folgenden Sachverhalt:
Eine numerische Steuerung 5 führt unter Kontrolle durch ein Systemprogramm 6 ein Nutzprogramm 9 aus. Die numerische Steuerung 5 ermittelt im Rahmen der Ausführung des Nutzprogramms 9 mittels mindestens einer Prozessoreinrichtung 10 mit mindestens einer ersten Taktrate Sollwerte für lagegeregelte Achsen 3 einer von der numerischen Steuerung 5 gesteuerten Maschine 1 und steuert die lagegeregelten Achsen 3 entsprechend den jeweils ermittelten Sollwerten an. In der numerischen Steuerung 5 ist für Ressourcen der numerischen Steuerung 5 jeweils hinterlegt, ob und gegebenenfalls in welchem Umfang sie freigegeben sind oder ob sie gesperrt sind. Die numerische Steuerung 5 ermittelt die Sollwerte für die lagegeregelten Achsen 3 unter Nutzung ausschließlich der freigegebenen Ressourcen.

Die vorliegende Erfindung weist viele Vorteile auf. Insbesondere ist es auf einfache Weise möglich, die Leistungsfähigkeit einer numerischen Steuerung 5 nach Bedarf zu skalieren. Als Vorteil für den Hersteller der Produktionsmaschine ergibt sich, dass ein Austausch der numerischen Steuerung 5 nur noch in Ausnahmefällen erforderlich ist. Als Vorteil für den Hersteller der numerischen Steuerung 5 ergibt sich, dass der Aufwand für die Hardware-Entwicklung von numerischen Steuerungen 5 reduziert werden kann, da weniger verschiedene numerische Steuerungen 5 entwickelt werden müssen. Der Hersteller der Produktionsmaschine 1 muss einerseits nur für die von ihm tatsächlich verwendeten Features bzw. Leistungsmerkmale zahlen, dennoch bietet die numerische Steuerung 5 ein erhebliches Erweiterungspotenzial.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine numerische Steuerung (5),
- wobei die numerische Steuerung (5) unter Kontrolle durch ein Systemprogramm (6) ein Nutzprogramm (9) ausführt,
- wobei die numerische Steuerung (5) im Rahmen der Ausführung des Nutzprogramms (9) mittels mindestens einer Prozessoreinrichtung (10) mit mindestens einer ersten Taktrate Sollwerte für lagegeregelte Achsen (3) einer von der numerischen Steuerung (5) gesteuerten Maschine (1) ermittelt und die lagegeregelten Achsen (3) entsprechend den jeweils ermittelten Sollwerten ansteuert,
- wobei in der numerischen Steuerung (5) für Ressourcen der numerischen Steuerung (5) jeweils hinterlegt ist, ob und gegebenenfalls in welchem Umfang sie freigegeben sind oder ob sie gesperrt sind,
- wobei die numerische Steuerung (5) die Sollwerte für die lagegeregelten Achsen (3) unter Nutzung ausschließlich der freigegebenen Ressourcen ermittelt.

2. Betriebsverfahren nach Anspruch 1,
**dadurch gekennzeichnet,**
**dass** die numerische Steuerung (5) im Rahmen der Ausführung des Systemprogramms (6), aber vor der Ausführung des Nutzprogramms (9) von einer Bedienperson (13) oder von einer computergesteuerten Einrichtung einen ersten Freischaltcode entgegennimmt und dass die numerische Steuerung (5) in Abhängigkeit von dem entgegengenommenen ersten Freischaltcode bestimmt, welche der Ressourcen in welchem Umfang freigegeben sind und welche der Ressourcen gesperrt sind.

3. Betriebsverfahren nach Anspruch 1 oder 2,
**dadurch gekennzeichnet,**
**dass** in der numerischen Steuerung (5) für im Rahmen der Ausführung des Nutzprogramms (9) auf das Nutzprogramm (9) bezogene wiederholt ausgeführte steuerungsinterne Aktionen minimale Ausführungszeiten hinterlegt sind und dass die numerische Steuerung (5) im Rahmen der Ausführung des Nutzprogramms (9) die steuerungsinternen Aktionen zumindest mit der jeweiligen minimalen Ausführungszeit ausführt.

4. Betriebsverfahren nach Anspruch 3,
**dadurch gekennzeichnet,**
**dass** die numerische Steuerung (5) im Rahmen der Ausführung des Systemprogramms (6), aber vor der Ausführung des Nutzprogramms (5) von einer Bedienperson (13) oder von einer computergesteuerten Einrichtung einen zweiten Freischaltcode entgegennimmt und dass die numerische Steuerung (5) die minimalen Ausführungszeiten in Abhängigkeit von dem entgegengenommenen zweiten Freischaltcode bestimmt.

5. Betriebsverfahren nach einem der obigen Ansprüche,
**dadurch gekennzeichnet,**
**dass** in der numerischen Steuerung (5) eine erste Obergrenze für die mindestens eine erste Taktrate hinterlegt ist und dass die numerische Steuerung (5) im Rahmen der Ausführung des Nutzprogramms (9) die erste Taktrate auf die erste Obergrenze begrenzt.

6. Betriebsverfahren nach Anspruch 5,
**dadurch gekennzeichnet,**
**dass** die numerische Steuerung (5) im Rahmen der Ausführung des Systemprogramms (6), aber vor der Ausführung des Nutzprogramms (9) von einer Bedienperson (13) oder von einer computergesteuerten Einrichtung einen dritten Freischaltcode entgegennimmt und dass die numerische Steuerung (5) die erste Obergrenze in Abhängigkeit von dem entgegengenommenen dritten Freischaltcode bestimmt.

7. Betriebsverfahren nach einem der obigen Ansprüche,
**dadurch gekennzeichnet,**
**dass** die numerische Steuerung (5) im Rahmen der Ausführung des Nutzprogramms (9) mit einer zweiten Taktrate und/oder mit einer Kommunikationsbandbreite mit einer externen Einrichtung (11, 12) kommuniziert und dass in der numerischen Steuerung (5) eine zweite Obergrenze für die zweite Taktrate und/oder eine dritte Obergrenze für die Kommunikationsbandbreite hinterlegt ist.

8. Betriebsverfahren nach Anspruch 7,
**dadurch gekennzeichnet,**
**dass** die numerische Steuerung (5) im Rahmen der Ausführung des Systemprogramms (6), aber vor der Ausführung des Nutzprogramms (9) von einer Bedienperson (13) oder von einer computergesteuerten Einrichtung einen vierten Freischaltcode entgegennimmt und dass die numerische Steuerung (5) die zweite Obergrenze und/oder die dritte Obergrenze in Abhängigkeit von dem entgegengenommenen vierten Freischaltcode bestimmt.

9. Betriebsverfahren nach einem der obigen Ansprüche,
**dadurch gekennzeichnet,**
**dass** die Prozessoreinrichtung (10) mit einem Prozessortakt arbeitet, dass in der numerischen Steuerung (5) eine vierte Obergrenze für den Prozessortakt hinterlegt ist und dass die numerische Steuerung (5) im Rahmen der Ausführung des Nutzprogramms (9) den Prozessortakt auf die vierte Obergrenze begrenzt.

10. Betriebsverfahren nach Anspruch 9,
**dadurch gekennzeichnet,**
**dass** die numerische Steuerung (5) im Rahmen der Ausführung des Systemprogramms (6), aber vor der Ausführung des Nutzprogramms (9) von einer Bedienperson (13) oder von einer computergesteuerten Einrichtung einen fünften Freischaltcode entgegennimmt und dass die numerische Steuerung (5) die vierte Obergrenze in Abhängigkeit von dem entgegengenommenen fünften Freischaltcode bestimmt.

11. Systemprogramm für eine numerische Steuerung (5), wobei das Systemprogramm Maschinencode (7) umfasst, der von der numerischen Steuerung (5) abarbeitbar ist, wobei die Abarbeitung des Maschinencodes (7) durch die numerische Steuerung (5) bewirkt, dass die numerische Steuerung (5) ein Betriebsverfahren nach einem der obigen Ansprüche ausführt.

12. Numerische Steuerung, wobei die numerische Steuerung mit einem Systemprogramm (6) nach Anspruch 11 programmiert ist, so dass sie ein Betriebsverfahren nach einem der Ansprüche 1 bis 10 ausführt.
